# FASCICULE DE BREVET EUROPEEN

(11) **EP 3 303 027 B1**
(45) Date de publication et mention de la délivrance du brevet: **13.03.2019**
(21) Numéro de dépôt: 16729019.6
(22) Date de dépôt: 12.05.2016
(51) Int. Cl.: B60G 99/00, B60G 21/05

(54) **CHAPE DEFORMABLE PLASTIQUEMENT POUR LE MONTAGE D'UNE ROUE DE VEHICULE AUTOMOBILE**
PLASTISCH VERFORMBARE SCHALE ZUR MONTAGE EINES RADES EINES KRAFTFAHRZEUGES
PLASTICALLY DEFORMABLE SHELL FOR MOUNTING A WHEEL OF A MOTOR VEHICLE

(30) Priorité: 05.06.2015 FR 1555155
(43) Date de publication de la demande: 11.04.2018
(73) Titulaire: Renault S.A.S., 92100 Boulogne-Billancourt (FR)
(72) Inventeur: ROLLET, Remi, 91190 Gif sur Yvette (FR); SAUDEMONT, Yoann, 28210 Les Pinthieres (FR)
(86) Numéro de dépôt international: PCT/FR2016/051120
(87) Numéro de publication internationale: WO 2016/193563

(56) Documents cités:
- EP-A1- 2 711 214
- EP-A2- 2 711 213
- DE-A1-102009 046 894
- DE-C- 684 844
- US-A- 5 044 808
- US-A- 6 152 468
- US-A1- 2014 252 742

## Description

### DOMAINE TECHNIQUE DE L'INVENTION

La présente invention concerne une chape pour le montage d'une roue de véhicule sur un élément de structure ou de suspension d'un véhicule automobile.

### ETAT DE LA TECHNIQUE

L'invention concerne notamment une chape pour le montage d'un organe sur lequel la roue est montée tournante.

Selon une conception connue, la roue est par exemple portée par une fusée de roue.

La partie inférieure de la roue, aussi appelée pied de roue, peut soumise à un choc ou à un impact dit latéral, c'est à dire selon une direction globalement transversal par rapport à la direction générale longitudinale du véhicule correspondant à la direction de roulage du véhicule.

Un tel choc ou impact peut par exemple se produire en cas de survirage du véhicule sur un sol de faible adhérence aboutissant à un choc avec une bordure d'un trottoir.

Dans le cas d'un tel choc, il est nécessaire, dans la conception globale du véhicule, de prévoir un scénario dit de "fusibilité" visant à informer le conducteur que le train de roues correspondant est endommagé, et ceci avant que le train ne présente ultérieurement des risques de rupture, notamment à vitesse élevée.

Selon une solution connue, c'est par exemple la fusée qui porte la roue qui se déforme de manière plastique en induisant un carrossage positif de la roue qui est perçu par le conducteur. selon une autre conception, c'est l'élément de structure (profil ou traverse) qui est déstabilisé.

Dans ces exemples, le remplacement de la fusée ou les opérations de réparation visant à redresser ou à changer l'élément de structure sont coûteux.

Par ailleurs, de nouvelles conceptions visent à remplacer la fusée par un roulement qui est vissé sur une chape spécifique en combinaison avec une traverse extrêmement rigide. Aucun de ces deux composants n'est alors susceptible de déformer en cas de choc latéral sur le pied de roue.

Le document US-6.152.468 illustre une conception d'une chape rigide, pour le montage d'une roue sur un longeron, qui présente une section en U et qui comporte une plaque support de la roue d'orientation globalement verticale et deux ailes latérales triangulaires parallèles orthogonales au plan de la plaque support dont chacune est délimitée par un premier côté vertical adjacent à la plaque support, un deuxième côté inférieur sensiblement horizontal, et un troisième côté incliné. Chacune des ailes latérales est ici rigidifiée par une portion emboutie.

La plaque support comporte un trou central et quatre trous périphériques pour la fixation d'un organe portant la roue à rotation.

Le document EP-B1-1.380.455 illustre une autre conception rigidifiée de la plaque verticale qui porte la fusée de roue.

A l'encontre des enseignements de ces documents, l'invention vise à proposer une nouvelle conception de la chape.

### BREF RESUME DE L'INVENTION

Dans ce but, l'invention propose une chape, pour le montage d'une roue de véhicule automobile sur un élément de structure ou de suspension d'un véhicule automobile, qui présente une section en U et qui comporte :
- une plaque support de la roue d'orientation globalement verticale;
- et deux ailes latérales triangulaires parallèles et orthogonales au plan de la plaque support, dont chacune est délimitée par un premier côté vertical adjacent à la plaque support, un deuxième côté inférieur sensiblement horizontal, et un troisième côté,
caractérisée en ce que chaque aile latérale comporte une zone de résistance réduite qui se déforme plastiquement lorsqu'un choc latéral est appliqué à la partie inférieure de la roue, selon une direction transversale par rapport au plan de la roue.

Selon d'autres caractéristiques de l'invention :
- la zone de résistance réduite est une portion déformable de l'aile sous la forme d'un bossage triangulaire qui s'étend jusqu'au troisième côté ;
- le bossage présente un contour triangulaire délimité par un bord inférieur horizontal ;
- la plaque support comporte un trou central pour le passage d'un organe de guidage en rotation de la roue ;
- le bossage est situé en dessous d'un plan horizontal passant par le centre du trou ;
- la zone de résistance réduite est une portion d'épaisseur réduite ;
- la zone d'épaisseur réduite est située au dessus d'un plan horizontal passant par le centre du trou ;
- les deux zones d'épaisseur réduite sont reliées entre elles par une zone d'épaisseur réduite de la plaque support ;
- le troisième côté comporte une découpe au droit de ladite portion d'épaisseur réduite ;
- chaque aile latérale comporte une bande inférieure de rigidification qui s'étend dans le plan de l'aile latérale, le long dudit deuxième côté, à partir de la plaque support.

### BREVE DESCRIPTION DES FIGURES

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'une chape selon l'état de la technique ;
- la figure 2 est une vue analogue à celle de la figure 1 qui illustre un premier mode de réalisation d'une chape selon l'invention comportant des zones de résistance réduite réalisées sous la forme de bossages, représentée dans son état avant déformation plastique ;
- la figure 3 est une vue analogue à celle de la figure 2 qui illustre un deuxième mode de réalisation d'une chape selon l'invention comportant des zones de résistance réduite sous la forme de portions d'épaisseur réduite ; et
- la figure 4 est une vue schématique latérale de la chape de la figure 3, en association avec un organe de montage à rotation d'une roue de véhicule, après déformation plastique des zones d'épaisseur réduite.

### DESCRIPTION DETAILLEE DES FIGURES

Dans la description qui va suivre, des chiffres de référence identiques désignent des pièces identiques ou ayant des fonctions similaires.

Pour faciliter la compréhension de la description et des revendications, en référence à la gravité terrestre et au trièdre L, V, T indiqué sur les figures, on utilisera les termes, vertical, longitudinal, transversal et horizontal.

Chacune des chapes représentée aux figures présente ici, à titre non limitatif, une symétrie générale de conception par rapport à un plan vertical et transversal de symétrie PVM.

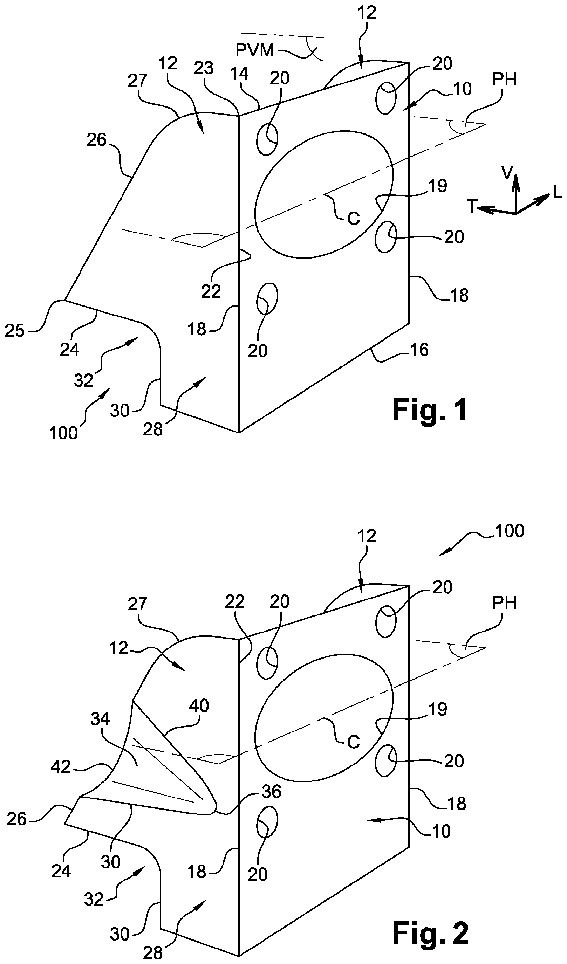

On a représenté à la figure 1 une chape 100 constituée d'une plaque support 10, et de deux ailes latérales 12.

A titre non limitatif, la chape 100 est réalisée en une seule pièce en tôle métallique découpée et pliée.

La plaque support 10 s'étend dans un plan globalement vertical et longitudinal.

La plaque support 10 constitue la face avant de la chape 100.

La plaque support 10 est délimitée par deux bords horizontaux longitudinaux supérieur 14 et inférieur 16, et par deux bords verticaux 18.

De manière connue, dans sa partie supérieure, la plaque support 10 comporte ici (à titre non limitatif) un trou central 19, par exemple pour le passage d'une partie d'un organe de guidage en rotation de la roue - non représentés, et quatre trous périphériques 20 par exemple pour le passage d'organes de fixation de l'organe de guidage en rotation de la roue.

On définit sur les figures le centre "C" du trou central 19 et un plan géométrique horizontal PH passant par le centre C.

Chaque aile latérale 12 s'étend dans un plan d'orientation verticale et transversale. Ainsi, les deux ailes latérales 12 sont parallèles entre elles et orthogonales au plan de la plaque support 10.

Chaque aile latérale 12 est de forme générale triangulaire rectangle et est délimitée par un bord vertical 22 correspondant au bord vertical adjacent 18 de la plaque support 10.

Chaque aile latérale 12 est aussi délimitée par un bord horizontal transversal inférieur 24 et par un bord arrière incliné 26. le bord incliné 26 s'étend depuis l'extrémité libre arrière 25 du bord horizontal inférieur 24, jusqu'à l'extrémité supérieure 23 du bord vertical 22 à laquelle elle est reliée par un tronçon courbé convexe 27.

A sa partie inférieure, chaque aile latérale 12 se prolonge par une bande inférieure de rigidification 28 qui s'étend dans le plan de l'aile latérale 12, le long du deuxième côté inférieur horizontal 24.

La bande de rigidification 28 s'étend transversalement vers l'arrière, à partir du bord vertical 18 de la plaque support 10, sur une partie seulement de la longueur du deuxième côté inférieur horizontal 24.

Ainsi, la bande de rigidification 28 est délimitée vers l'arrière par un bord vertical 30 qui, avec la potion libre du deuxième côté inférieur horizontal 24, délimite une "découpe" 32 de contour à angle droit.

Dans la conception illustrée à la figure 1, les ailes latérales sont planes et de grande rigidité, notamment à l'encontre de sollicitations orientées selon un "carrossage positif", par exemple en cas de choc sur le pied de la roue associée.

La rigidité globale de la chape est encore accrue lorsque celle-ci est fixée par soudage sur élément structurel non représenté qui est reçu dans les deux découpes 32.

Selon le premier mode de réalisation illustré à la figure 2, chacune des ailes latérales 12 comporte une zone de résistance réduite déformable plastiquement qui est réalisée sous la forme d'un bossage 34 réalisé par exemple sous la forme d'un "embouti".

A titre non limitatif, chaque bossage 34 s'étend ici vers "l'intérieur" de la chape en direction de l'autre aile latérale.

Chaque bossage 34 présente ici un contour triangulaire avec son sommet 36 agencé à proximité du premier bord vertical 22.

Chaque bossage 34 est délimité vers le bas par un bord inférieur sensiblement horizontal 38 et par un autre bord supérieur incliné 40.

Les deux bords 38 et 40 s'étendent jusqu'au troisième bord incliné 26 et le bossage 34 débouche ainsi dans vers l'arrière en étant délimité par un tronçon incurvé 42 de ce bord 26.

Dans cette conception, en cas de choc ou d'impact par exemple sur le pied de la roue associée, les deux ailes latérales 12 sont susceptibles de se déformer simultanément pour permettre une déformation globale de la chape correspondant à une modification du carrossage dans le sens du carrossage positif.

Cette déformation correspond à une déformation de la plaque support avant 10, dont la partie supérieur put par exemple "pivoter" autour d'un axe horizontal et longitudinal (non représenté) situé sensiblement au droit des sommets 36 des bossages emboutis 34.

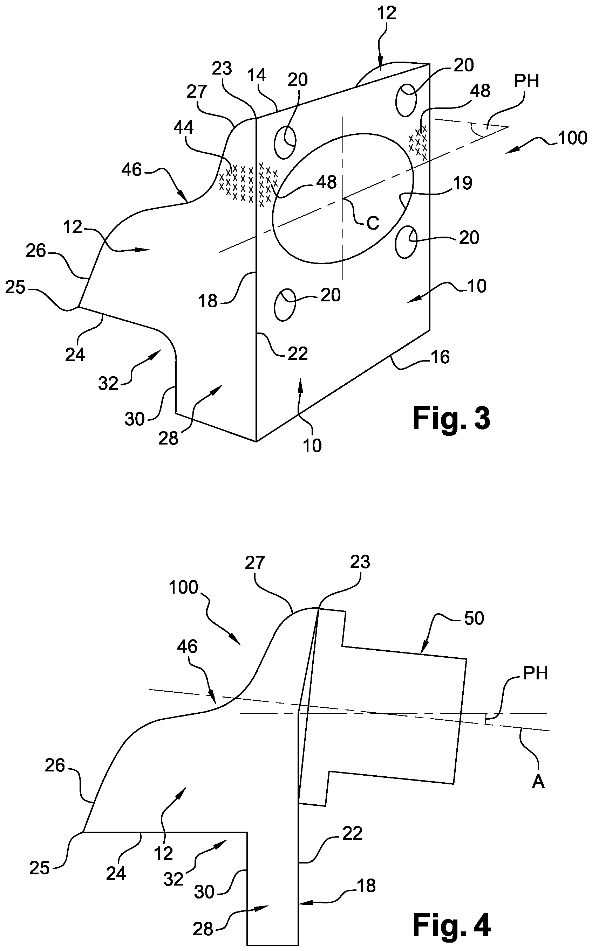

Selon le deuxième mode de réalisation des figures 3 et 4, chaque aile latérale 12 comporte une zone de résistance réduite déformable plastiquement 44 qui est ici une portion d'épaisseur réduite, ou amincie, de l'aile latérale.

Chaque zone amincie 44 est située au dessus du plan horizontal PH.

Chaque zone amincie 44 peut être associée à une découpe 46 de profil concave formée dans le troisième bord incliné 26.

Pour faciliter la déformation plastique en cas de choc, pour aboutir à l'état schématisé à la figure 4, la plaque support avant 10 peut aussi comporter des zones amincies 48 agencées sensiblement au droit des zones amincies 44 des ailes latérales 12.

Comme on peut le voir à la figure 4 sur laquelle on a schématisé un organe 50 - tel que par exemple un roulement - pour le montage à rotation de la roue associée, en cas de choc ou d'impact par exemple sur le pied de la roue associée, les deux ailes latérales 12 sont susceptibles de se déformer simultanément pour permettre une déformation globale de la chape 100 correspondant à une modification du carrossage dans le sens du carrossage positif (illustré schématiquement par l'inclinaison de l'axe a de l'organe 50 par rapport au plan horizontal PH).

## Revendications

1. Chape (100), pour le montage d'une roue de véhicule automobile sur un élément de structure ou de suspension d'un véhicule automobile, qui présente une section en U et qui comporte
- une plaque support (10) de la roue d'orientation globalement verticale ;
- et deux ailes latérales (12) triangulaires parallèles et orthogonales au plan de la plaque support (10), dont chacune est délimitée par un premier côté vertical (22) adjacent à la plaque support (10), un deuxième côté inférieur (24) sensiblement horizontal, et un troisième côté 26),
**caractérisée en ce que** chaque aile latérale (12) comporte une zone (34, 44) de résistance réduite qui se déforme plastiquement lorsqu'un choc latéral est appliqué à la partie inférieure de la roue, selon une direction (T) transversale par rapport au plan de la roue.

2. Chape selon la revendication 1, **caractérisée en ce que** la zone de résistance réduite est une portion déformable de l'aile latérale (12) sous la forme d'un bossage triangulaire (34) qui s'étend jusqu'audit troisième côté (26).

3. Chape selon la revendication 2, **caractérisée en ce que** le bossage (34) présente un contour triangulaire (18) délimité par un bord inférieur horizontal (24).

4. Chape selon l'une quelconque des revendications précédentes, **caractérisée en ce que** la plaque support (10) comporte un trou central (19).

5. Chape selon la revendication 4 prise en combinaison avec l'une des revendications 2 ou 3, **caractérisée en ce que** le bossage (34) est situé en dessous d'un plan horizontal (PH) passant par le centre (C) du trou central (19).

6. Chape selon la revendication 1, **caractérisée en ce que** la zone de résistance réduite est une portion d'épaisseur réduite (44).

7. Chape selon la revendication 6 prise en combinaison avec la revendication 4, **caractérisée en ce que** la zone d'épaisseur réduite (44) est située au dessus d'un plan horizontal passant par le centre du trou.

8. Chape selon la revendication 6, **caractérisée en ce que** les deux zones d'épaisseur réduite (44) sont reliées entre elles par une zone d'épaisseur réduite (48) de la plaque support (10).

9. Chape selon l'une quelconque des revendications 6 à 8, **caractérisée en ce que** le troisième côté (26) comporte une découpe (46) au droit de ladite portion d'épaisseur réduite (44).

10. Chape selon l'une quelconque des revendications précédentes, **caractérisée en ce que** chaque aile latérale (18) comporte une bande inférieure (28) de rigidification qui s'étend dans le plan de l'aile latérale (18), le long dudit deuxième côté (24), à partir de la plaque support (10).

## Patentansprüche

1. Schale (100) für die Montage eines Kraftfahrzeugrades an einem Struktur- oder Aufhängungselement eines Kraftfahrzeugs, welche einen U-förmigen Querschnitt aufweist und welche umfasst:
- eine Stützplatte (10) für das Rad mit im Wesentlichen vertikaler Ausrichtung;
- und zwei dreieckige Seitenflügel (12), die parallel und zur Ebene der Stützplatte (10) orthogonal sind, von denen jeder von einer vertikalen ersten Seite (22), die der Stützplatte (10) benachbart ist, einer unteren zweiten Seite (24), die im Wesentlichen horizontal ist, und einer dritten Seite (26) begrenzt wird,
**dadurch gekennzeichnet, dass** jeder Seitenflügel (12) einen Bereich (34, 44) verminderter Festigkeit aufweist, welcher sich plastisch verformt, wenn ein seitlicher Stoß auf den unteren Teil des Rades in einer Richtung (T) ausgeübt wird, die quer zur Ebene des Rades verläuft.

2. Schale nach Anspruch 1, **dadurch gekennzeichnet, dass** der Bereich verminderter Festigkeit ein verformbarer Abschnitt des Seitenflügels (12) in Form eines dreieckigen Höckers (34) ist, welcher sich bis zur dritten Seite (26) erstreckt.

3. Schale nach Anspruch 2, **dadurch gekennzeichnet, dass** der Höcker (34) einen dreieckigen Umriss (18) aufweist, der von einem horizontalen unteren Rand (24) begrenzt wird.

4. Schale nach einem der vorhergehenden Ansprüche, **dadurch gekennzeichnet, dass** die Stützplatte (10) ein zentrales Loch (19) aufweist.

5. Schale nach Anspruch 4 in Kombination mit einem der Ansprüche 2 oder 3, **dadurch gekennzeichnet, dass** sich der Höcker (34) unterhalb einer horizontalen Ebene (PH) befindet, die durch den Mittelpunkt (C) des zentralen Loches (19) verläuft.

6. Schale nach Anspruch 1, **dadurch gekennzeichnet, dass** der Bereich verminderter Festigkeit ein Abschnitt verminderter Dicke (44) ist.

7. Schale nach Anspruch 6 in Kombination mit Anspruch 4, **dadurch gekennzeichnet, dass** sich der Bereich verminderter Dicke (44) oberhalb einer horizontalen Ebene befindet, die durch den Mittelpunkt des Loches verläuft.

8. Schale nach Anspruch 6, **dadurch gekennzeichnet, dass** die zwei Bereiche verminderter Dicke (44) durch einen Bereich verminderter Dicke (48) der Stützplatte (10) miteinander verbunden sind.

9. Schale nach einem der Ansprüche 6 bis 8, **dadurch gekennzeichnet, dass** die dritte Seite (26) einen Ausschnitt (46) direkt bei dem Abschnitt verminderter Dicke (44) aufweist.

10. Schale nach einem der vorhergehenden Ansprüche, **dadurch gekennzeichnet, dass** jeder Seitenflügel (18) einen unteren Versteifungsstreifen (28) aufweist, welcher sich in der Ebene des Seitenflügels (18) von der Stützplatte (10) aus entlang der zweiten Seite (24) erstreckt.

## Claims

1. Shell (100), for mounting a wheel of a motor vehicle on a structural element or suspension element of a motor vehicle, which shell has a U-shaped cross section and includes:
- a wheel support plate (10) having an essentially vertical orientation;
- and two triangular side flanges (12) that are parallel and orthogonal to the plane of the support plate (10), each of which is delimited by a first vertical side (22) adjacent to the support plate (10), a second substantially horizontal bottom side (24), and a third side (26),
**characterized in that** each side flange (12) includes an area (34, 44) of reduced resistance which deforms plastically when a lateral shock is applied to the bottom part of the wheel, in a transversal direction (T) in relation to the plane of the wheel.

2. Shell according to Claim 1, **characterized in that** the area of reduced resistance is a deformable portion of the side flange (12) in the form of a triangular boss (34) which extends as far as said third side (26).

3. Shell according to Claim 2, **characterized in that** the boss (34) has a triangular contour (18) delimited by a horizontal bottom edge (24).

4. Shell according to any one of the preceding claims, **characterized in that** the support plate (10) includes a central hole (19).

5. Shell according to Claim 4, taken in combination with one of claims 2 or 3, **characterized in that** the boss (34) is situated below a horizontal plane (PH) passing through the center (C) of the central hole (19).

6. Shell according to Claim 1, **characterized in that** the area of reduced resistance is a portion of reduced thickness (44).

7. Shell according to Claim 6, taken in combination with claim 4, **characterized in that** the area of reduced thickness (44) is situated above a horizontal plane passing through the center of the hole.

8. Shell according to Claim 6, **characterized in that** the two areas of reduced thickness (44) are connected to each other by an area of reduced thickness (48) of the support plate (10).

9. Shell according to any one of Claims 6 to 8, **characterized in that** the third side (26) includes a cutout (46) directly above said portion of reduced thickness (44).

10. Shell according to any one of the preceding claims, **characterized in that** each side flange (18) includes a bottom stiffening strip (28) which extends in the plane of the side flange (18), along said second side (24), from the support plate (10).
